# EUROPÄISCHE PATENTSCHRIFT

(11) **EP 1 905 651 B1**
(45) Veröffentlichungstag und Bekanntmachung des Hinweises auf die Patenterteilung: **01.06.2011**
(21) Anmeldenummer: 07018489.0
(22) Anmeldetag: 20.09.2007
(51) Int. Cl.: B60R 13/04

(54) **Einteiliger, mehrfarbirger Dachzierstab**
One piece, multicoloured roof trim
Baguette décorative multicolore de toît en une pièce

(30) Priorität: 27.09.2006 DE 102006045511
(43) Veröffentlichungstag der Anmeldung: 02.04.2008
(73) Patentinhaber: DURA Automotive Body and Glass Systems GmbH, 58840 Plettenberg (DE)
(72) Erfinder: Tillmann, Frank, 70174 Stuttgart (DE); Erney, Thomas, 71034 Böblingen (DE); Fitterer, Holger, 76287 Rheinstetten (DE); Hüttemeister, Roger, 57368 Lennestadt (DE); König, Andreas, 59846 Sundern (DE); Reuner, Gerd, 58791 Werdahl (DE)
(74) Vertreter: Zinnecker, Armin

(56) Entgegenhaltungen:
- EP-A- 0 630 763
- EP-A1- 1 147 847
- DE-T2- 69 908 484
- DE-U1- 8 907 191
- JP-A- 2 108 459

## Beschreibung

Die Erfindung betrifft einen einteiligen, mehrfarbigen Dachzierstab mit mindestens einem Übergangsbereich. Im modernen Automobildesign besteht die Notwendigkeit, Dachzierstäbe, Windabweiser, Dichtungen und andere für den Betrachter sichtbaren Anbauteile des Karosserieexterieurs sowohl in der Wagenfarbe wie auch in einem zusätzlichen Farbton wie beispielsweise einer schwarzen Hochglanzoberfläche auszuführen. Gerade im Bereich der A-Säule wird im Übergang zur Windschutzscheibe eine Zierleiste mit schwarzer Hochglanzoberfläche bevorzugt.

Um den Übergang zwischen den verschiedenen Farbtönen sauber und für den Betrachter ansprechend darzustellen, werden verschiedenste Verfahren angewendet. So beschreibt die DE 89 07 191 U1 eine Schutzfolie aus einem thermoplastischen Elastomer, welche vor dem Lackiervorgang auf den nicht in Wagenfarbe zu lackierenden Teil des Bauelements aufgezogen wird. Nachdem das Bauelement lackiert und auf das Fahrzeug montiert wurde, kann die Schutzfolie von Hand abgezogen werden; der mit Schutzfolie überdeckte Sektor des Bauelements bleibt in der ursprünglichen Oberflächenfarbe des Bauelements. Die optische Qualität der Farbkante hängt von verschiedensten Faktoren wie bspw. der Sorgfalt beim Aufbringen und beim Abziehen der Schutzfolie ab. Werden die Arbeiten nicht mit konstanter Qualität ausgeführt, können gerade in dem optisch sehr sensiblen Frontbereich unsaubere und damit für die Erscheinungsweise unerwünschte Farbübergänge entstehen.

Die EP 0 630 763 B1 beschreibt ein Verfahren zum Herstellen von aus Kunststoff bestehenden oder Kunststoff enthaltenden Teilen mit farblich unterschiedlich lackierten Flächen, wobei eine Tragfolie als Träger für mindestens eine auf einem Haftvermittler angeordnete Lackschicht verwendet und zusammen mit der Lackschicht auf dem zu lackierenden Teil angeordnet wird, wobei als Tragfolie eine biaxial gereckte Polyesterfolie, eine Aluminiumfolie oder eine aluminiumbedampfte Polyesterfolie verwendet wird. Die Gestaltung oder ein Verfahren zur Darstellung eines Farbübergangs wird hier jedoch nicht dargestellt.

Die deutsche Übersetzung DE 699 08 484 T2 einer europäischen Patentschrift zeigt ein Verfahren zur Herstellung eines Kunststoffteils, mit mindestens zwei farblich begrenzten Bereichen durch Einbringung von mehreren unterschiedlich farbigen Kunststoffmaterialien in schmelzflüssigem Zustand in den Hohlraum einer Gussform. Diese Einbringung der Kunststoffmaterialien in den Hohlraum der Gussform wird derart gesteuert durchgeführt, dass einerseits die Front des Kunststoffmaterials, die in den Hohlraum der Gussform fließt, um diese auszufüllen, so in der Form voranschreitet, dass jeder der unterschiedlich farbigen Filme in zentrifugaler Weise gereckt wird und dass sich die Fronten des Kunststoffmaterials in der Gussform so vereinigen, dass sie einen ästhetisch ansprechenden Farbübergang darstellen können. Eine Nachbearbeitung des Übergangs ist hier nicht beschrieben.

Vor diesem Hintergrund liegt der vorliegenden Erfindung daher die Aufgabe zugrunde, einen Dachzierstab der eingangs genannten Art so auszuführen, dass das optische Erscheinungsbild und das Design des Übergangsbereichs zwischen den mehrfarbig zu lackierten Segmenten des Dachzierstab einwandfrei darstellbar ist.

Diese Aufgabe wird erfindungsgemäß durch die Merkmale des Anspruchs 1 gelöst. Ein Vorteil der Erfindung liegt in dem designseitig einwandfreien Erscheinungsbild des mehrfarbigen Dachzierstabs auf der Karosserie ohne visuelle Beeinträchtigungen durch den Übergangsbereich zwischen den in unterschiedlichen Farben ausgeführten Teilsegmenten.

In einer weiteren vorteilhaften Ausführung weist der Übergangsbereich an der Lackkante eine eingedrückte Lackiernut auf. Durch diese Lackiernut oder Sickenverprägung wird optisch ein klar definierter Übergangsbereich durch eine scharf abgegrenzte Vertiefung zwischen den unterschiedlich zu lackierenden Segmenten des Dachzierstabs geschaffen.

Zur Herstellung dieser Lackiernut in dem Übergangsbereich zwischen den zu lackierenden Teilen des Dachzierstabs mit den Segmenten Dachbereich und Wasserabweiser kann ein Prägestempel senkrecht zur Oberfläche des Dachzierstabs in eine definierte Tiefe in die Lackiernut im Übergangsbereich des Dachzierstabs gedrückt werden.

Ein bevorzugtes Ausführungsbeispiel ist anhand der Zeichnungen dargestellt. Dabei zeigen:
- Fig. 1: eine perspektivische Ansicht des Fahrzeugs
- Fig. 2: eine perspektivische Detailansicht
- Fig. 3: eine Schnittansicht durch den Übergangsbereich

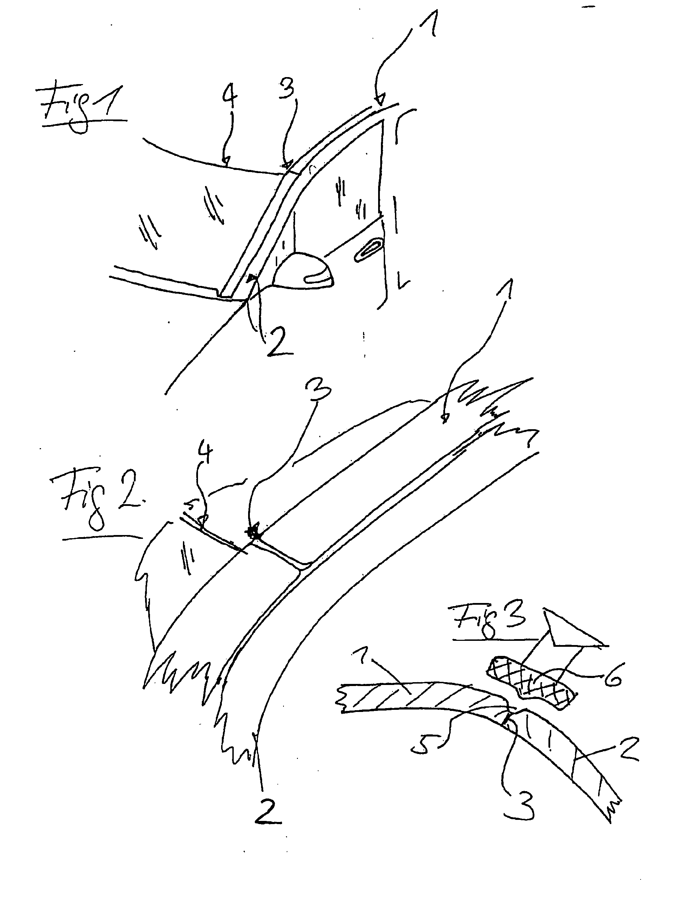

Die Fig. 1 zeigt eine perspektivische Ansicht eines Fahrzeugs mit Blick auf den Dachzierstab im Bereich der A-Säule, auf der ein Wasserabweiser 2 sitzt. Ein Übergangsbereich 3 zwischen dem meist in schwarzem Hochglanz polierten Wasserabwieser 2 und einem Dachbereich 1 befindet sich auf Höhe einer oberen Windschutzscheibenkante 4.

Die Fig. 2 zeigt eine perspektivische Detailansicht im Abschnitt um den Übergangsbereich 3 zwischen den unterschiedlich lackierten Segmenten des Dachzierstabs. Das designseitig einwandfreie Erscheinungsbild des mehrfarbigen Zierstabs mit seinen Segmenten Dachbereich 1 und Wasserabweiser 2 auf der Karosserie ohne visuelle Beeinträchtigungen des Übergangsbereichs 3 zwischen den lackierten Teilen wird durch eine überpolierte Lackkante erreicht.

Die Fig. 3 zeigt eine Schnittansicht durch den Übergangsbereich 3 zwischen den zu lackierenden Teilen des Dachzierstabs mit den Segmenten Dachbereich 1 und Wasserabweiser 2. Der Schnitt ist senkrecht zur Oberfläche des Dachzierstabs und parallel zu den äußeren Kanten des Dachzierstabs gelegt. Ein Stempel 6 wird auf der Höhe des Übergangsbereichs 3 mit der Stoßrichtung senkrecht zur Oberfläche des Dachzierstabs auf die Lackiernut 5 gedrückt. Durch die Form des Stempels 6 können verschiedene Sickenverprägungsformen gewählt werden.

Durch diese Lackiernut oder Sickenverprägung wird optisch ein klar definierter Übergangsbereich durch eine scharf abgegrenzte Vertiefung mit beliebiger durch den Stempel 6 wählbarer Breite und Form zwischen den unterschiedlich zu lackierenden Segmenten des Dachzierstabs geschaffen.

## Patentansprüche

1. Einteiliger, mehrfarbiger Dachzierstab mit mindestens einem Übergangsbereich (3) zwischen einem lackierten Segment Dachbereich (1) und einem unterschiedlich Lackierten Segment Wasserabweiser (2),
**dadurch gekennzeichnet,**
**daß** der Übergangsbereich (3) eine überpolierte Lackkante aufweist.

2. Dachzierstab nach Anspruch 1, **dadurch gekennzeichnet, daß** der Übergangsbereich (3) zwischen dem Segment Dachbereich (1) und dem Segment Wasserabweiser (2) an der Lackkante eine eingedrückte Lackiernut (5) aufweist.

## Claims

1. One-piece, multicoloured roof trim with at least one transition region (3) between a painted roof region segment (1) and a differently painted water deflector segment (2), **characterized in that** the transition region (3) has a super-polished paint edge.

2. Roof trim according to Claim 1, **characterized in that** the transition region (3) between the roof region segment (1) and the water deflector segment (2) has an impressed painting groove (5) at the paint edge.

## Revendications

1. Baguette décorative multicolore de toît en une pièce avec au moins une zone de transition (3) entre un segment laqué zone de toît (1) et un segment laqué différemment hydrofuge (2), **caractérisée en ce que** la zone de transition (3) présente une arête de laque surpolie.

2. Baguette décorative de toît selon la revendication 1, **caractérisée en ce que** la zone de transition (3) entre le segment zone de toît (1) et le segment hydrofuge (2) présente à l'arête de laque une rainure de laquage enfoncée (5).
